# NOUVEAU FASCICULE DE BREVET EUROPEEN

(11) **EP 2 035 735 B2**
(45) Date de publication et mention de la décision concernant l'opposition: **17.09.2014**
(45) Mention de la délivrance du brevet: 13.10.2010
(21) Numéro de dépôt: 07785904.9
(22) Date de dépôt: 05.07.2007
(51) Int. Cl.: F16L 3/26, H02G 3/04, B29D 23/18

(54) **GAINE TUBULAIRE ANNELEE ET DISPOSITIF POUR FABRIQUER UNE TELLE GAINE**
BERINGTE ROHRFÖRMIGE UMMANTELUNG UND VERFAHREN ZUR HERSTELLUNG EINER DERARTIGEN UMMANTELUNG
RINGED TUBULAR SHEATH AND DEVICE FOR MAKING SUCH A SHEATH

(30) Priorité: 05.07.2006 FR 0606089
(43) Date de publication de la demande: 18.03.2009
(73) Titulaire: Delfingen FR-Anteuil S.A., 25340 Anteuil (FR)
(72) Inventeur: BAVEREL, Christophe, 90400 Trevenans (FR); REMY, Benoît, 25430 Sancey Le Grand (FR)
(74) Mandataire: Stona, Daniel
(86) Numéro de dépôt international: PCT/EP2007/005937
(87) Numéro de publication internationale: WO 2008/003485

(56) Documents cités:
- EP-A1- 0 860 921
- EP-A2- 0 268 869
- EP-B1- 0 952 652
- FR-A1- 2 745 429
- US-B2- 6 938 645

## Description

La présente invention se rapporte à une gaine tubulaire annelée de protection comprenant plus particulièrement deux coques ouvertes, dites extérieure et intérieure, ayant même diamètre et dont l'une, la coque extérieure, présente une ouverture plus petite que le diamètre pour s'insérer par déformation élastique sur la coque intérieure dans une position de fermeture.

On rappelle que le faisceau électrique embarqué dans une automobile est classiquement constitué de fils électriques de section ronde assemblés en torons de fils. Une fois ces torons formés, le faisceau est habillé de divers éléments de protection, avant d'être fixé sur les différents éléments du véhicule tels que moteur et carrosserie.

Les gaines tubulaires annelées constituent l'un des types de protections de faisceaux électriques communément utilisés dans l'industrie automobile. Les gaines tubulaires annelées, formées par le moulage d'un tube extrudé en une succession d'annelures, sont usuellement réalisées en matières plastiques extrudées, telles que le polypropylène, le polyamide ou les polyesters. Ces gaines offrent une bonne résistance à l'abrasion et à l'écrasement, tout en conservant une grande souplesse facilitant la réalisation et le conditionnement du câblage protégé, et le montage de celui-ci sur le véhicule. Il est toutefois difficile d'enfiler le toron à l'intérieur de la gaine annelée, notamment sur des tronçons de grande longueur. C'est pourquoi il est souvent utilisé des gaines annelées fendues, c'est-à-dire coupées selon une ligne droite longitudinale en fin de procédé de fabrication. On peut alors introduire ultérieurement en n'importe quelle zone de la gaine des fils et câbles électriques directement au travers de la fente.

Les gaines annelées fendues peuvent intégrer des systèmes de fermetures plus ou moins élaborés afin d'éviter que le tube ne laisse échapper des fils dans les zones où la fente tend à se rouvrir. Ces systèmes de fermeture se montrent relativement peu efficace dans les zones de faibles rayons de courbure ou rigidifient excessivement la gaine. Un tel exemple est donné par le document EP-A-860 921 qui décrit une gaine selon le préambule de la revendication 1.

Les gaines annelées fendues peuvent également, une fois mises en place sur le faisceau, être totalement enrubannées, ce qui verrouille efficacement la fente, mais oblige le câbleur à une opération supplémentaire.

Une autre solution, par exemple connue du document EP-A-268869, qui décrit une gaine tubulaire selon le préambule de la revendication 1, consiste à utiliser un assemblage constitué d'une première coque ouverte se positionnant autour du faisceau électrique à protéger et d'une deuxième coque ouverte ayant même diamètre que celui de la première coque, à l'épaisseur de paroi près. La deuxième coque, dite aussi coque extérieure, présente une ouverture plus petite que le diamètre pour s'insérer par déformation élastique sur la première coque, dite aussi coque intérieure. Au cours de l'insertion, l'ouverture de la coque extérieure se déforme en traction jusqu'à passer le point correspondant au diamètre de la coque intérieure. Au-delà de ce point, l'ouverture de la coque extérieure retourne dans la position non étirée. Dans le document JP 2000-115942, les deux coques sont reliées par une languette longitudinale pour palier l'inconvénient d'un assemblage à partir de deux éléments séparés qui complique la logistique, la coupe à longueur de la protection et les opérations de montage chez le câbleur

La solution connue de ces deux documents permet de maintenir la gaine tubulaire annelée dans la position de fermeture par le seul retour de l'ouverture de la coque extérieure dans la position non étirée. Autrement dit, aucun moyen de verrouillage n'est nécessaire pour maintenir les deux coques dans la position de fermeture. Toutefois, cette solution conduit à un effort d'insertion de la coque extérieure sur la coque intérieure relativement important, étant observé que la coque intérieure ne participe pas à l'insertion mais tend au contraire à s'opposer à la déformation de l'ouverture de la coque extérieure jusqu'au passage par le point correspondant au diamètre.

Le document FR-A-2745429 décrit un dispositif pour fabriquer une gaine tululaire selon le préambule de la revendication 3.

Le but de l'invention est de modifier une gaine tubulaire annelée de protection connue selon l'exposé précédent, pour diminuer l'effort d'insertion des deux coques dans la position de fermeture et ainsi faciliter l'utilisation de la gaine.

A cet effet, l'invention a pour objet une gaine tubulaire annelée selon la revendication 1.

La gaine annelée de protection ainsi obtenue empêche la sortie des câblages, notamment lorsque le faisceau chemine dans des zones à faible rayon de courbure, même lorsqu'elle est remplie à 100%. Cette gaine de protection remplace avantageusement les solutions existantes, en garantissant une protection des câblages dans les zones à faible rayon de courbure, tout en facilitant la gestion des références, la coupe à longueur et les opérations de montage pour le câbleur.

L'invention s'étend à un dispositif pour fabriquer une gaine tubulaire annelée selon la revendication 1, comprenant les caractéristiques de la revendication 3.

De préférence, la buse d'extrusion et le profil annelé des deux moules appairés ont une section qui s'inscrit dans deux cercles dont les centres sont rapprochés pour créer un chevauchement dans un plan médian et le moyen de découpe est disposé de façon dissymétrique par rapport au plan médian de cintrage.

L'invention sera mieux comprise à l'aide des dessins annexés, donnés à titre d'exemple non limitatif.
La figure 1 montre le procédé d'extrusion moulage de la gaine annelée.
La figure 2 montre une coupe de la buse d'extrusion et des moules.
La figure 3 montre une vue de face de la filière de forme oblongue cintrée.
La figure 4 est une vue de face d'une paire de moules.
La figure 5 est une vue agrandie de la zone de charnière ainsi obtenue sur la gaine annelée.
La figure 6 montre le procédé de découpe de la gaine annelée.
La figure 7 montre une vue de face de la gaine annelée ainsi découpée.
La figure 8 montre la gaine annelée découpée lors de son montage sur le faisceau de fils.
La figure 9 montre la gaine extérieure se plaçant sur la gaine intérieure.
La figure 10 montre la gaine ainsi obtenue, en position fermée autour du faisceau de câbles.
La figure 11 montre une coupe la gaine ainsi obtenue.
La figure 12 montre en coupe transversale une gaine selon l'invention présentant une même hauteur d'annelure dans la zone de recouvrement des deux coques extérieure et intérieure, comme en dehors de cette zone.
Les figures 13a et 13b représentent les coupes A-A et B-B de la figure 12, respectivement dans et en dehors de la zone de recouvrement de deux coques extérieure et intérieure.

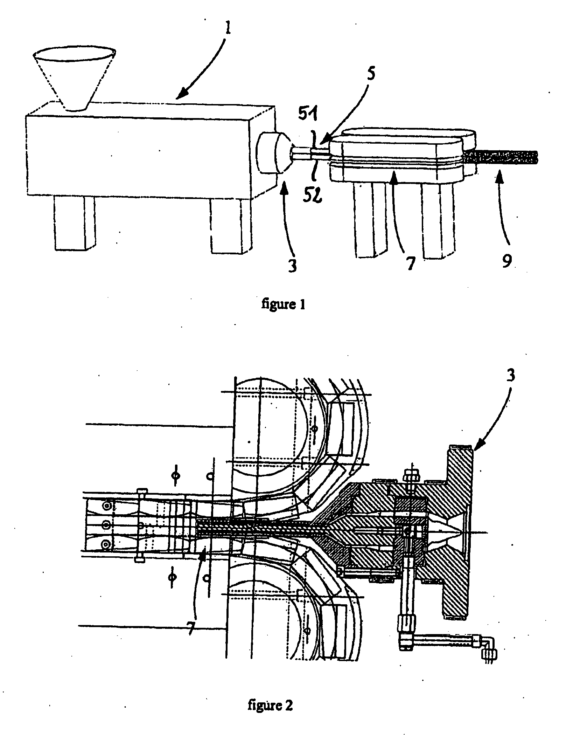

Selon un mode de réalisation de l'invention, en référence aux figures 1, 2 et 6, la gaine annelée 9 est obtenue par extrusion moulage d'un tube en matière thermoplastique de forme oblongue cintrée, puis découpe d'une bande longitudinale de ce tube.

En référence aux figures 1, 2 et 3, la matière thermoplastique, par exemple un polypropylène, est chauffée dans une extrudeuse 1 avec une température d'extrusion de l'ordre de 190 ° C minimum, puis circule dans une tête d'extrusion 3. Une buse d'extrusion 12 montée dans une filière 11 lui donne la forme d'un tube oblong 5 cintré suivant un plan médian 29. Pour cela, la buse d'extrusion 12 présente un cintrage 14 dans son plan médian 29 pour extruder le tube oblong cintré 5 en une première partie tubulaire 51 et une deuxième partie tubulaire 52 de même diamètre D et solidaires dans le plan médian de cintrage 29. Ce tube 5 est soufflé et refroidi dans une mouleuse 7 contre les parois de deux moules appairés 47,49 ayant la forme de demi-coquilles 13 ayant un profil annelé 48 et avançant dans le sens de l'extrusion et se faisant face suivant un plan de joint 13 le long L du tube 5, afin de lui donner une paroi annelée. Le profil annelé 48 de deux demi-coquilles appairées 47,49 présentent également un cintrage 14 dans leur plan médian 29 pour mouler les annelures 43,45 simultanément dans les deux parties tubulaires 51,52.

Dans les exemples d'illustration, la buse d'extrusion 12 et le profil annelé 48 des deux moules appairés 47,49 ont une section qui s'inscrit dans deux cercles dont les centres 01,02 sont rapprochés pour créer un chevauchement dans leur plan médian 29.

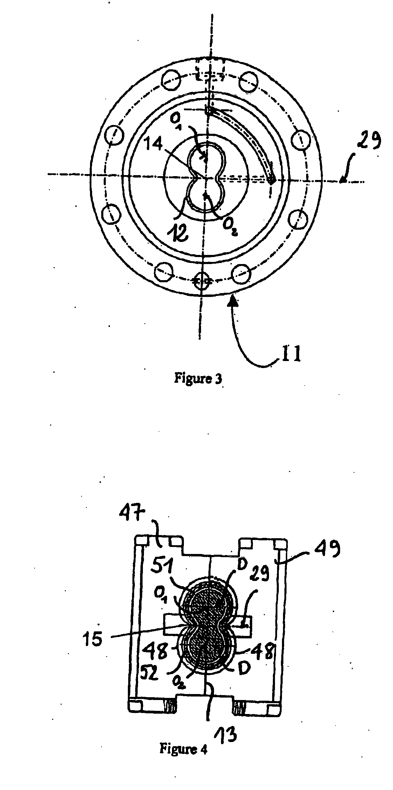

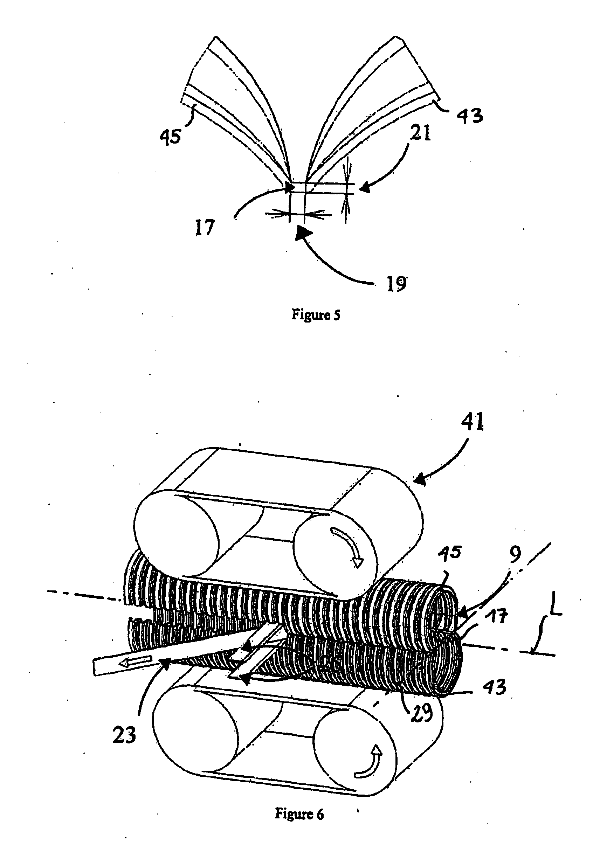

En référence aux figures 4 et 5, chaque paire de demi-coquilles 13 servant au moulage du tube 5 comporte sur le profil 48 de l'une 49 des demi-coquilles une zone plate 15 dans le plan médian de cintrage 29. Cette zone plate 15 permet de mouler un tube 5 comportant une bande longitudinale non annelée 17, dont l'épaisseur 21 et la largeur 19 lui permettent de garder une souplesse suffisante afin de jouer un rôle de charnière par déformation plastique, tout en ne rigidifiant pas excessivement la gaine 9. A titre d'exemple, pour une gaine annelée de diamètre 23 mm, l'épaisseur 21 est égale à 0,4 mm, et la largeur 19 est égale à 0,45 mm.

En référence à la figure 6, la gaine annelée 9 est amenée par un système de tirage 41 vers deux lames de cutter 25 afin de découper et de retirer une bande de matière 23 longitudinalement, opposée à la bande plate longitudinale 17 formant charnière. Les lames de cutter 25 peuvent être remplacées par un système de lames rotatives.

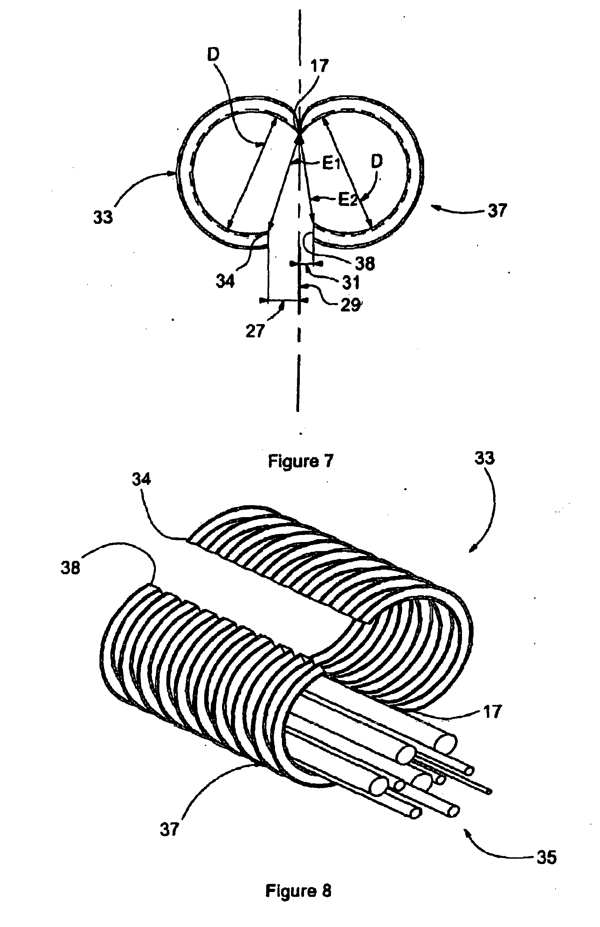

En référence à la figure 7, la bande de matière est enlevée de la paroi opposée à la zone plate 17 pour former deux coques ouvertes 33,37, issues des première 51 et deuxième 52 parties tubulaires du tube oblong cintré 5. Les deux coques, dites extérieure 33 et intérieure 37, ont par conséquent le même diamètre D et sont solidaires par la bande longitudinale non annelée 17 formant charnière. La coque extérieure 33 présente une ouverture E1 plus petite que le diamètre D pour s'insérer sur la coque intérieure 37 par pivotement autour de la charnière 17. L'ouverture E1 de la coque extérieure 33 s'étend de la charnière 17 au bord de coque 34 opposé, formé par la découpe de la bande de matière 23. Le pivotement des deux coques 33,37 autour de la charnière 17 permet simultanément à la coque extérieure de glisser sur la coque intérieure et à la coque intérieure de glisser sous la coque extérieure. La déformation élastique de l'ouverture E1 de la coque extérieure 33 jusqu'au point de passage correspondant au diamètre D de la coque intérieure 37 se trouve ainsi réduite. Il en résulte que la fermeture de la gaine par insertion est plus aisée.

De préférence, la découpe est désaxée par rapport au plan médian de cintrage 29, c'est à dire que le moyen de découpe 25 est disposé de façon dissymétrique par rapport au plan médian de cintrage 29, pour former, dans la coque intérieure 37, une ouverture E2 plus petite que celle E1 formée dans la coque extérieure 33. De même que l'ouverture E1 de la coque extérieure 33, l'ouverture E2 de la coque intérieure 37 s'étend de la charnière 17 à un bord de coque opposé 38, formé par la découpe de la bande de matière 23. Cet agencement facilite encore le pivotement relatif des deux coques 33, 37 autour de la charnière 17 dans la position de fermeture. A titre d'exemple, pour une gaine annelée de diamètre D égal à 23 mm, la distance 27 entre le plan médian de cintrage 29 et le bord de coque 34 de la coque extérieure 33 est égale à 9 mm, et la distance 31 entre le plan médian de cintrage 29 et le bord de coque 38 de la coque intérieure est égale à 2,5 mm. La distance 27 doit être suffisante pour permettre l'insertion aisée du faisceau 35 de câbles à protéger, mais pas trop importante afin que la gaine de protection se maintienne en position fermée lorsque la partie externe recouvre la partie interne.

En référence à la figure 8, la gaine ainsi obtenue, constituée d'une coque intérieure 37 et d'une coque extérieure 33 est placée par l'opérateur sur le faisceau de câbles à protéger.

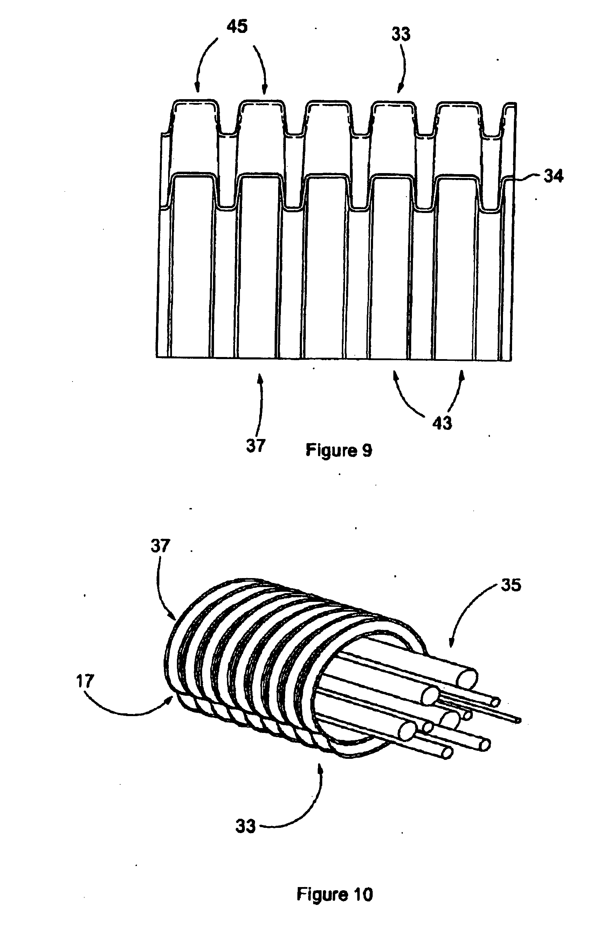

En référence aux figures 9 et 10, la coque extérieure 33 pivote autour de la charnière 17 pour s'insérer sur la coque intérieure 37 par déformation élastique en extension de l'ouverture E1 de la coque extérieure 33 et une déformation élastique en compression de l'ouverture E2 de la coque intérieure 37. Dans la position de fermeture, les annelures 45 de la coque extérieure 33 sont insérées dans les annelures 43 de la coque intérieure 37.

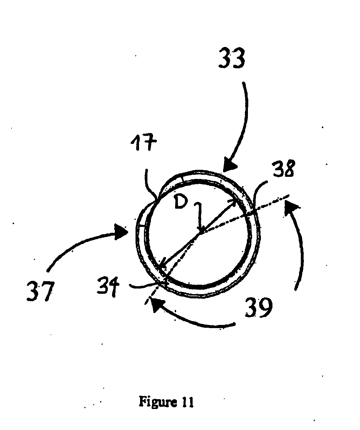

En référence à la figure 11, la coque extérieure 33 recouvre la coque intérieure 37 sur un secteur d'angle 39. L'angle de recouvrement 39 est défini par les bords de coque 34, 38 des deux coques, opposés à la charnière 17. L'angle de recouvrement est compris entre 145° et 155°, et de préférence égale à 150°.

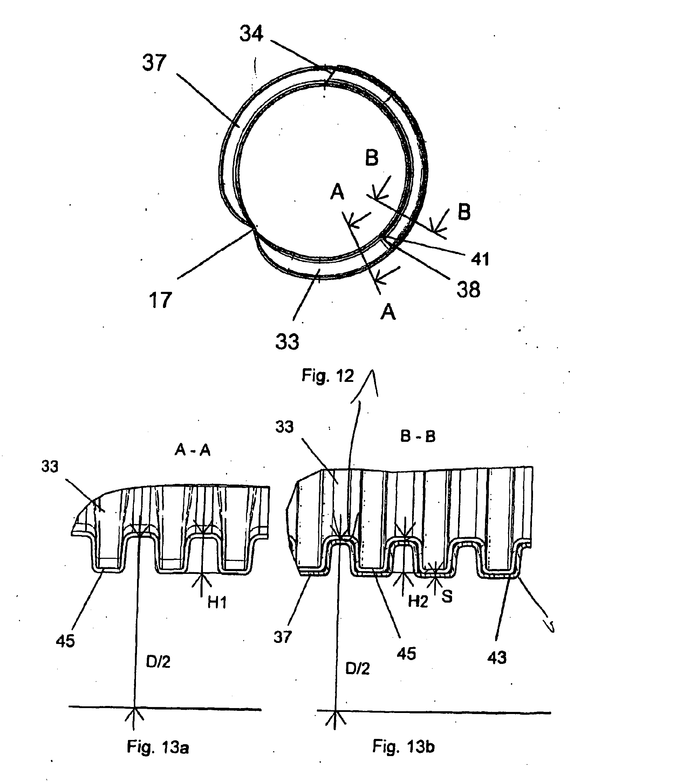

En référence aux figures 12 et 13, la coque extérieure 33 présente deux hauteurs d'annelure H1 et H2 différentes, comptées à partir du même diamètre crête à crête D, pour former un décrochement 41 égal à l'épaisseur de paroi S de la coque intérieure 37. Le long de l'arc qui s'étend entre la charnière 17 et le décrochement 41, la coque extérieure 33 possède la hauteur d'annelure H1. Le long de l'arc qui s'étend entre le décrochement 41 et le bord 34, opposé à la charnière 17, et qui correspond à l'angle de recouvrement 39 de deux coques 33, 37 dans la position de fermeture, la hauteur d'annelure est H2, plus petite que H1.

La hauteur d'annelure H2 de la coque extérieure 33, augmentée de l'épaisseur de paroi S de la coque intérieure 37, est égale, le long de l'arc où le recouvrement est présent, à la hauteur d'annelure H1 de la coque extérieure 33, le long de l'arc où le recouvrement n'est pas présent. Par cet agencement, le bord 38 de la coque intérieure 37, opposé à la charnière 17, vient en butée contre le décrochement 41 sans faire saillie vers l'intérieur de la gaine pour éviter de former un bord abrasif ou coupant vis-à-vis de faisceaux de câbles 35 logés dans la gaine.

Pour réaliser les deux hauteurs d'annelure H1 et H2, les deux moules appairés 47, 49 possèdent un profil annelé 48 à deux hauteurs d'annelure, comptées à partir d'un même diamètre correspondant au diamètre D des deux parties tubulaires 51, 52 du tube moulé 5, et présentant entre elles une différence choisie pour correspondre à l'épaisseur S de la paroi annelée 43 de l'une 51 des deux parties tubulaires 51 et 52 formant la coque intérieure 37.

## Revendications

1. Gaine tubulaire annelée comprenant deux coques ouvertes (33,37), dites extérieure (33) et intérieure (37), solidaires d'une charnière (17) pour s'insérer par pivotement auteur de la charnière (17), ayant même diamètre (D) et dont l'une, la coque extérieure (33), présente une ouverture (E1) s'étendant de la charnière (17) à un bord de coque opposé (34), pour s'insérer par déformation élastique sur la coque intérieure (37) dans une position de fermeture, insertion au cours de laquelle l'ouverture (E1) de la coque extérieure (33) se déforme en traction jusqu'à passer par un point correspondant au diamètre (D) de la coque intérieure (37) et, au-delà de ce point, retourne dans la position non étirée, l'ouverture (E1) de la coque extérieure (33) étant plus petite que le diamètre (D), les deux coques (33,37) ayant la forme de deux coques ouvertes (33,37) de section circulaire issues d'une première (51) et d'une deuxième (52) parties tubulaires annelées provenant d'un tube oblong (5) cintré, **caractérisée en ce que** les deux coques (33,37), dans la position de fermeture, se recouvrent d'un angle de recouvrement (39) défini par les deux bords de coque opposée (34,38) et compris entre 145° et 155°.

2. Gaine tubulaire annelée selon la revendication 1, **caractérisée en ce que** la coque intérieure (33) présente une ouverture (E2) s'étendant de la charnière (17) à un bord de coque opposé (38), plus petite que l'ouverture (E1) de la coque extérieure (33).

3. Dispositif pour fabriquer une gaine tubulaire annelée selon les revendications 1 à 2 comprenant une extrudeuse (1) munie d'une buse d'extrusion (12) pour extruder un tube (5), une mouleuse (7) équipée de moules (47,49) munis chacun d'un profil annelé (48) s'appairant suivant un même plan de joint (13) pour mouler le tube (5) en un tube à paroi annelée (43,45), **caractérisé en ce que** la buse d'extrusion (12) et le profil annelé (48) des deux moules appairés (47,49) présentent chacun un cintrage (14) dans un plan médian (29) pour respectivement extruder le tube (5) en deux parties tubulaires (51,52) de même diamètre (D) et solidaires dans le plan médian de cintrage (29) et mouler les annelures (43,45) simultanément dans les deux parties tubulaires (51,52), le profil annelé (48) de l'un (49) des deux moules appairés présentant une partie non annelée (15) dans le plan médian de cintrage (29) pour laisser une bande longitudinale de paroi non annelée (17), un moyen de découpe (25) étant disposé pour découper une bande de matière longitudinale (23) de part et d'autre du plan médian de cintrage (29) et à l'opposé de la bande longitudinale non annelée (17) pour former deux coques de section circulaire (33,37) de même diamètre (D), solidaires par la bande longitudinale non annelée (17) formant charnière et pourvues chacune d'une ouverture (E1,E2) s'étendant de la charnière (17) à un bord de coque opposé (34,38) résultant de la découpe de la bande de matière longitudinale (23).

4. Dispositif selon la revendication 3, **caractérisé en ce que** la buse d'extrusion (12) et le profil annelé (48) des deux moules appairés (47,49) ont une section qui s'inscrit dans deux cercles dont les centres (01,02) sont rapprochés pour créer un chevauchement dans un plan médian.

5. Dispositif selon la revendication 3 ou 4, **caractérisé en ce que** le moyen de découpe (25) est disposé de façon dissymétrique par rapport au plan médian de cintrage (29).

## Patentansprüche

1. Röhrenartige Umhüllung mit Ringstruktur, die zwei offene Schalen (33, 37), nämlich eine äußere (33) und eine innere (37), die einstückig mit einem Gelenk (17) ausgebildet sind, um sich durch Schwenken um das Gelenk (17) ineinander einzufügen, mit demselben Durchmesser (D) aufweist und von denen eine, die äußere Schale (33), eine Öffnung (E1) aufweist, die sich von dem Gelenk (17) bis zu einem gegenüberliegenden Schalenrand (34) erstreckt, um sich durch elastische Verformung in die innere Schale (37) in einer Schließstellung einzufügen, wobei während dieses Einfügens die Öffnung (E1) der äußeren Schale (33) sich durch Zug verformt bis sie einen Punkt passiert, der dem Durchmesser (D) der inneren Schale (37) entspricht, und nach diesem Punkt in die nicht ausgezogene Stellung zurückkehrt, wobei die Öffnung (E1) der äußeren Schale (33) kleiner als der Durchmesser (D) ist, wobei die beiden Schalen (33,37) die Form von zwei offenen Schalen eines Kreisabschnitts aufweisen aus einem ersten (51) und einem zweiten (52) röhrenartigen Teil mit Ringstruktur, die von einem länglichen gekrümmten Rohr (5) stammen,
**dadurch gekennzeichnet, dass** sich die beiden Schalen (33, 37) in der Schließstellung mit einem Überdeckungswinkel (39) überdecken, der durch die beiden gegenüberliegenden Schalenränder (34, 38) gebildet ist und zwischen 145° und 155° liegt.

2. Röhrenartige Umhüllung mit Ringstruktur nach Anspruch 1, **dadurch gekennzeichnet, dass** die innere Schale (33) eine Öffnung (E2) aufweist, die sich von dem Gelenk (17) bis zu einem gegenüberliegenden Schalenrand (38) erstreckt und kleiner als die Öffnung (E1) der äußeren Schale (33) ist.

3. Vorrichtung zum Herstellen einer röhrenartigen Umhüllung mit Ringstruktur nach den Ansprüchen 1 bis 2, die einen Extruder (1) mit einer Extrudierdüse (12) zum Extrudieren einer Röhre (5), ein Formwerkzeug (7) mit Formen (47, 49) aufweist, die jeweils ein Profil mit Ringstruktur (48) aufweisen und entsprechend einer gleichen Schließebene (13) zusammengefügt werden, um die Röhre (5) als eine Röhre mit einer Wand mit Ringstruktur (43, 45) zu formen, **dadurch gekennzeichnet, dass** die Extrudierdüse (12) und das Profil mit Ringstruktur (48) der beiden zusammengesetzten Formen (47, 49) jeweils eine Krümmung (14) in einer Medianebene (29) aufweisen, um jeweils die Röhre (5) in zwei röhrenartigen Teilen (51, 52) mit gleichem Durchmesser (D) sowie einstückig in der Medianebene der Krümmung (29) zu extrudieren und um die Ringstruktur (43, 45) gleichzeitig in den beiden röhrenartigen Teilen (51, 52) zu formen, wobei das Profil mit Ringstruktur (48) der einen (49) der beiden zusammengesetzten Formen einen Bereich frei von einer Ringstruktur (15) in der Medianebene der Krümmung (29) aufweist, um einen Abschnitt der Wand in Längsrichtung frei von einer Ringstruktur (17) zu belassen, wobei ein Abtrennmittel (25) vorhanden ist, um einen Materialstreifen in Längsrichtung (23) beiderseits der Medianebene der Krümmung (29) gegenüber dem Abschnitt in Längsrichtung frei von einer Ringstruktur (17) abzutrennen, um zwei Schalen (33, 37) eines Kreisabschnitts mit gleichem Durchmesser (D) zu bilden, die einstückig mit dem Abschnitt in Längsrichtung frei von einer Ringstruktur (17) sind, der das Gelenk bildet, und von denen jede mit einer Öffnung (E1, E2) versehen ist, die sich von dem Gelenk (17) bis zu einem gegenüberliegenden Schalenrand (34, 38) erstreckt, der durch das Abtrennen des Materialstreifens in Längsrichtung (23) entstanden ist.

4. Vorrichtung nach Anspruch 3, **dadurch gekennzeichnet, dass** die Extrudierdüse (12) und das Profil mit Ringstruktur (48) der beiden zusammengefügten Formen (47, 49) einen Abschnitt aufweisen, der in zwei Kreisen liegt, deren Mittelpunkte (01, 02) aneinander angenähert sind, um eine Überlappung in einer Medianebene zu bewirken

5. Vorrichtung nach Anspruch 3 oder 4, **dadurch gekennzeichnet, dass** das Abtrennmittel (25) asymmetrisch in Bezug auf die Medianebene der Krümmung (29) angeordnet ist

## Claims

1. Ring tubular sheath comprising two open shells (33, 37), referred to as the outer shell (33) and inner shell (37), integral with a hinge (17) so as to engage by pivoting about the hinge (17), which have the same diameter (D), and one of which, the outer shell (33) has an opening (E1), which extends from the hinge (17) to an opposite shell edge (34), so as to engage by elastic deformation over the inner shell (37) in a closed position, and during the course of this engagement the opening (E1) of the outer shell (33) is subjected to tensile deformation until it has passed a point corresponding to the diameter (D) of the inner shell (37) and, beyond this point, returns to the unstretched position, the opening (E1) of the outer shell (33) being smaller than the diameter (D), both shells (33, 37) having the form of two open shells (33, 37) which have a circular cross-section and result from a first (51) and a second (52) ringed tubular parts obtained from an inwardly curved oblong tube (5), **characterized in that** the two shells (33, 37) overlap in the closed position by an overlap angle (39) of between 145° and 155° defined by the two opposite shell edges (34, 38).

2. Ringed tubular sheath according to claim 1, **characterized in that** the inner shell (33) has an opening (E2) which extends from the hinge (17) to an opposite edge (38) of the shell and is smaller than the opening (E1) of the outer shell (33).

3. Device for producing a ringed tubular sheath according to claims 1 to 2, comprising an extruder (1) provided with an extrusion nozzle (12) for extruding a tube (5), a moulder (7) equipped with moulds (47, 49) which are each provided with a ringed profile (48) and are arranged in pairs along the same mating plane (13), to mould the tube (5) into a tube with ringed walls (43, 45), **characterised in that** the extrusion nozzle (12) and the ringed profile (48) of two paired moulds (47, 49) each have an inward curve (14) in a median plane (29) so as to extrude the tube (5) as two tubular parts (51, 52), which have the same diameter (D) and are connected to one another in the inward curve median plane (29), and to simultaneously mould the rings (43, 45) on the two tubular parts (51, 52) respectively, the ringed profile (48) of one (19) of the two paired moulds having a non-ringed part (15) in the inward curve median plane (29) to produce a longitudinal strip (17) of wall without rings, a cutting means (25) for cutting a longitudinal strip (23) of material (25) being arranged on either side of the inward curve median plane (29) and opposite the non-ringed longitudinal strip (17) to form two shells (33, 37) having a circular cross-section and the same diameter (D), which are
connected to one another by the non-ringed longitudinal strip (17) forming a hinge, and which are each provided with an opening (E1, E2) which extends from the hinge (17) to an opposite shell edge (34, 38) and results from the process of cutting out the longitudinal strip (23) of material.

4. Device according to claim 3, **characterised in that** the extrusion nozzle (12) and the ringed profile (48) of the two paired moulds (47, 49) have a cross-section which is inscribed in two circles, the centers (O1, 02) of which are brought together to form an overlap in the median plane.

5. Device according to either claim 3 or 4. **characterised in that** the cutting means (25) is arranged unsymmetrically relative to the inward curve median plane (29).
